# EUROPEAN PATENT APPLICATION

(11) **EP 2 166 041 A1**
(43) Date of publication of application: **24.03.2010**
(21) Application number: 09178583.2
(22) Date of filing: 11.02.2004
(51) Int. Cl.: C09B 67/00, C09B 57/00

(54) **Easily dispersible pigment composition**

(30) Priority: 20.02.2003 EP 03405108
(62) Divisional of application: 04710044.1
(71) Applicant: BASF SE, 67056 Ludwigshafen (DE)
(72) Inventor: Ruffieux, Vincent, 1723, Marly (CH); Modoux, Florence, 4057, Basel (CH)
(74) Representative: Bernhardt, Wolfgang Willy-Hans

(57) **Abstract**

The present invention comprises a process for preparation of a stir-in pigment composition comprising a treatment of the pigment surface with at least one polymer and/or copolymer using water/solvent emulsion or pure organic solvent, miscible or non-miscible with the polymer or copolymer, or a mixture of these solvents or only water, in the presence of a surfactant, and optionally in the presence of a polar pigment derivative and/or a fluidiser and/or other components, said stir-in pigment composition as such as well as the use of this pigment composition for coloring high molecular-weight organic materials.

## Description

This application relates to a method of coloring high molecular-weight organic materials with stir-in pigment composition containing a pigment as well as said stir-in pigment composition as such.

In general, after being mixed into a solvent-borne resin system, a pigment, preferably an organic pigment must be further dispersed prior to its final application. This additional dispersion step generally requires that the pigment be dispersed for a period of 2 to 48 hours using milling equipment, such as a vertical or horizontal ball mill or an attritor mill with milling media, such as glass beads or stainless steel balls. Since this additional dispersion step is both time consuming and costly, the elimination of this step by using pigments that are adequately dispersed during a simple mixing step, herein referred to as stir-in pigments, is a great advantage.

US-A-5,298,076 discloses the use of carbazole dioxazine crude of particular particle size and specific surface area as a multi-colored effect pigment for use in a variety of applications, including as a stir-in pigment. However, this publication does not suggest that other pigment crudes could also be utilized as stir-in pigments.

DE-A 2,202,143 discloses a process for the preparation of an easy to disperse laked azo pigment, laking being carried out in the presence of a water-soluble salt of a polymerized abietic acid and a water-soluble salt of a dialkyl ester of sulfosuccinic acid. However, the addition of special chemicals is necessary to improve the dispersability.

The inventive pigment compositions are utilized as stir-in pigments with excellent rheological and dispersability properties.

A subject of the invention is a process for coloring a high-molecular-weight organic material, which comprises uniformly dispersing an effective pigmenting amount of a stir-in pigment in the high-molecular-weight organic material by stirring the stir-in pigment into a suspension or solution of the high-molecular-weight organic material; wherein the stir-in pigment is a pigment composition which comprises from 0.1 to 99.9, preferably from 70 to 98 more preferably from 80 to 95 and most preferably from 90 to 95% parts by weight of a pigment, preferably an organic pigment.
The preparation of the inventive pigment composition includes treatment of the pigment surface with at least one polymer and/or copolymer using water/solvent emulsion or pure organic solvent, miscible or non-miscible with the polymer or copolymer, or a mixture of these solvents or only water, in the presence of a surfactant, and optionally in the presence of a polar pigment derivative (so called "synergist") and/or a fluidiser and/or other components.

In the prior art, this kind of processes only yields pigments easily dispersible in water-borne paints or inks, whereas the disclosed inventive process yields pigment powders or granules easily dispersible in solvent-borne paints or inks.

Solvents which are not miscible with water are for example aromatic solvents, petroleum ether derivatives, non-water miscible alcohols, non-water miscible ethers and esters, alkanes, toluol, xylol and mixtures of them.

Pure organic solvent useful in the present invention are for example water miscible alcohols, as methyl-, ethyl- or butyl alcohol, and esters, as ethyl acetate, butyl acetate or isobutyl acetate.

The polar pigment derivate optionally used in the present invention can be any pigment, preferably a pigment selected from the azo, azomethine, methine, anthraquinone, phthalocyanine, perinone, perylene, diketopyrrolopyrrole, thioindigo, iminoisoindoline, iminoisoindolinone, quinacridone, flavanthrone, indanthrone, anthrapyrimidine, dioxazine and quinophthalone pigments, possessing at least one polar group, particularly sulfo-, carboxy- or primary, secondary or tertiary amino group.

Preferred polar groups are for example -(CH₂)ₙNR₃R₄, -COOM, -SO₃M, -SO₂NR₃R₄, -NR₃R₄, and -CONR₃R₄, wherein R₃ and R₄ independently of the other are hydrogen or an alkyl-, cycloalkyl-, aryl- or heteroaryl moiety and M is a cation.
Preferred cations are for example H⁺, Li⁺, Na⁺, K⁺, Mg⁺⁺_{1/2}, Ca⁺⁺_{1/2}, Sr⁺⁺_{1/2}, Ba⁺⁺_{1/2}, Cu⁺, Cu⁺⁺_{1/2}, Zn⁺⁺_{1/2}, Mn⁺⁺_{1/2}, Al⁺⁺⁺_{1/3} or [NR₅R₆R₇R₈]⁺, wherein R₅, R₆, R₇ und R₈ independently of the other are hydrogen, unsubstituted C₁-C₁₈alkyl or C₁-C₁₈alkyl which is substituted by hydroxy or amino, unsubstituted phenyl or phenyl which is substituted by C₁-C₆alkyl, halogen, nitro or C₁-C₄alkoxy, C₆-C₂₄alkenyl or C₇-C₂₄aralkyl, polyethyleneimine, or are each independently of the other a chain consisting of 1, 2 or 3 members, each member independently of any other(s) being -(CH₂)₂O-, -(CH₂)₃O-, -CH(CH₃)CH₂O-, -CH₂CH(CH₃)O- or - CH₂CH(CH₂O-)O- and the chains being terminated by H, CH₃, C₂H₅ or C(=O)CH₃.

The polar pigment derivate preferably belongs to the same pigment class and has advantageously the same structure as the used pigment.

Further examples for a polar pigment derivate useful in the present invention are compounds disclosed in GB-A-1 356 253 and those disclosed under (b) in US-A-4,914,211.

The amount of the optional polar pigment derivative can vary from 0 to 20%, most preferably from 1 to 5% by weight, calculated on the weight of pigment.

Optionally, the treatment with polar pigment derivatives and non-miscible polymers and/or copolymers can be combined. In the prior art, pigments were treated with pigment derivatives during the pigment conditioning or in a separate step, then dried, and the polymer and/or copolymer was added in the paint mill base. The advantage of the inventive direct treating of the pigment with the polymer and/or copolymer before the drying step, is that the pigment cannot form aggregates during the drying step which unexpectedly causes a considerable improvement of the dispersibility.

The inventive pigment treatment renders the preparation of pigment compositions containing more than 90% pigment content by weight for opaque pigments and more than 80% pigment content by weight for transparent pigments possible.

If the inventive pigment treatment uses water/solvent emulsion or only water, the process temperature can vary between 1 and 98° C (boiling point of water), preferably between 25 and 50° C.
If the inventive pigment treatment uses only organic solvent, the process temperature can vary from 2-5° C above the freezing point to 2-5° C below the boiling point of the solvent or of the mixture of solvents.

As a rule, no inorganic filler and no high content of resin or waxes are necessary and also there is no need for adding other additives during the mill base preparation.

The inventive pigment composition allows to arrive at full colour development and outstanding colour properties in mass tone with much less energy ('easy-dispersible'). Under those 'easy-dispersible' conditions, the colour properties are comparable to or better than using the 'state-of-the-art' classical pigment dispersion techniques (high energy, time consuming, lot of dispersion additives)

Further, the inventive pigment composition excels by strong rheology improvement for "problematic" pigments.
Pigments treated using polar pigment derivatives or other polar treatments are usually difficult to disperse, due to the stronger aggregation forces between the particles. Even if the millbase rheology is strongly improved, high energy devices must be used to ensure complete dispersion of the pigment. On the other hand, high amounts of additives usually used to improve the dispersibility (as for example fillers, resins or waxes) decrease the pigment content and, hence, the ultimate colour strength. Pigment concentrates are not taken into account since they fail to meet the 100% solid content requirement. Nevertheless, they encounter compatibility problems when used in a non-specific system (solvent or binder shocks).
The inventive treatment of pigments allows both to considerably decrease the viscosity of the mill base and to improve the dispersibility. Normally, the pigment reaches its full colour strength potential by only shaking a few seconds by hand.

In this application, the term "stirring" is intended to have its usual meaning, but is also intended to include any low-sheer-force mixing step, such as shaking.

The stir-in pigments of this invention possess outstanding dispersibility properties, it means that the pigments disperse easily when used as stir-in pigments.

Since the pigment compositions of this invention are simply added and stirred into a suspension or solution of the high-molecular-weight organic material, the inventive stir-in pigments avoid the costly energy and time consuming dispersion process that is normally required to uniformly disperse pigments in a coating or ink system.

Additionally, since there is no additional milling step, there is no milling media to clean, which results in much less waste to dispose of. In general, the stirring simply involves blending the stir-in pigment into the solution or suspension of the high-molecular-weight organic material until a uniform dispersion is achieved. The blending is advantageously carried out by stirring the resulting pigment-resin suspension for from about 5 minutes to about 3 hours, preferably for from 10 to 30 minutes, by stirring methods known in the art, for example with a disk or propeller stirrer.

The present method is a general method applicable with any commercial pigment, preferably organic pigments, transparent or opaque pigment, or pigment crude.

Especially suitable classes of pigments and pigment crudes include the azo, azomethine, methine, anthraquinone, phthalocyanine, perinone, perylene, diketopyrrolopyrrole, thioindigo, iminoisoindoline, iminoisoindolinone, quinacridone, flavanthrone, indanthrone, anthrapyrimidine and quinophthalone pigments; in particular the diketopyrrolopyrrole, quinacridone, phthalocyanine, indanthrone or iminoisoindolinone pigments.

Possibly inorganic pigments include for example ZnO, TiO₂, Fe₂O₃, bismuth-vanadate (BiVa), Pb-chromate, Pb-sulfochromate, Pb-chromate-molybdate and Pb-sulfochromate-molybdate, as C.I. Pigment Yellow 34, 53, 164 and 184, C.I. Pigment Red 104, C.I. Pigment Brown 24 and 33, C.I. Pigment Blue 28 and 36, C.I. Pigment Green 17, 26 and 50 and C.I. Pigment Black 27 and 30.

Notable pigments useful in the present process are those pigments identified in The Colour Index, including quinacridone pigments: C.I. Pigment Red 202, C.I. Pigment Violet 19, and C.I. Pigment Red 122; perylene pigment: C.I. Pigment Red 179; azo condensation pigments: C.I. Pigment Red 170, C.I. Pigment Red 144, and C.I. Pigment Brown 23; isoindolinone pigments: C.I. Pigment Orange 61, C.I. Pigment Yellow 109, and C.I. Pigment Yellow 110; diketopyrrolopyrrole pigments: C.I. Pigment Red 254, C.I. Pigment Red 255, C.I. Pigment Red 264, C.I. Pigment Orange 71, and C.I. Pigment Orange 73; copper phthalocyanine pigment: C.I. Pigment Blue 15; anthraquinone pigments: C.I. Pigment Blue 60, C.I. Pigment Red 177 and C.I. Pigment Yellow 147 and dioxazine pigments: C.I. Pigment Violet 23 and C.I. Pigment Violet 37, or the corresponding crude or blends and solid solution of them.

Preferred pigments are the pigments of the formula 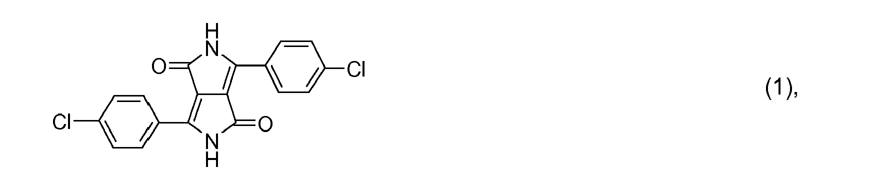 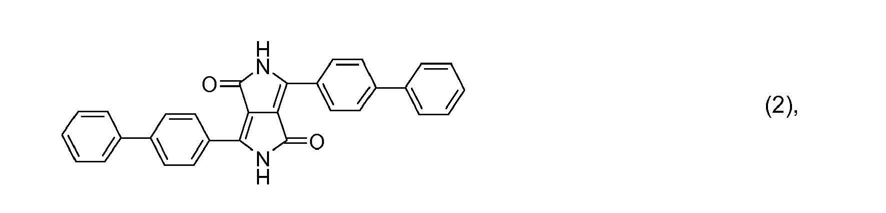 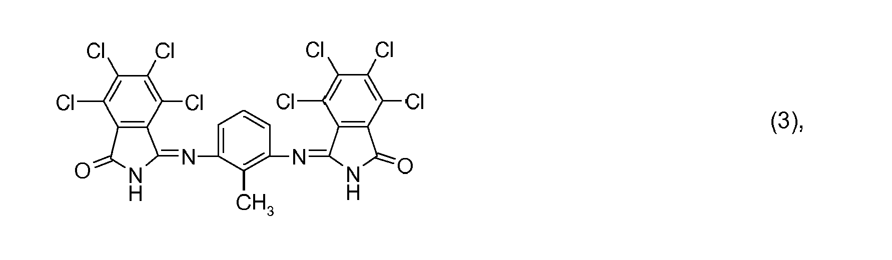 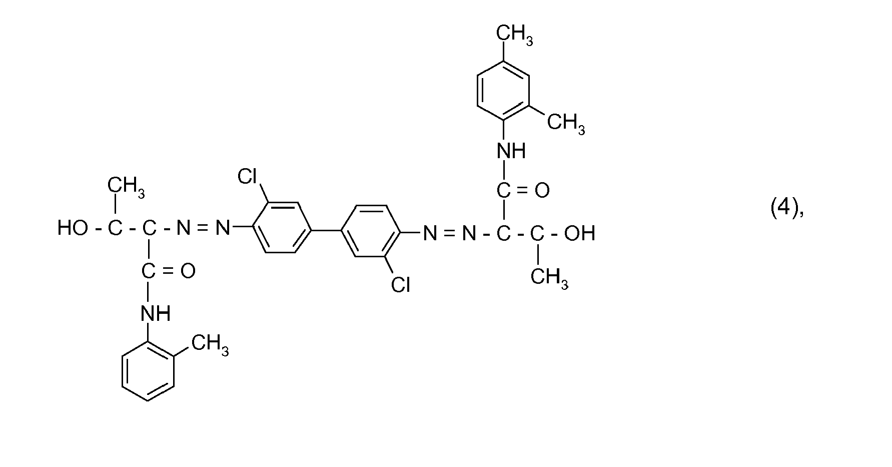 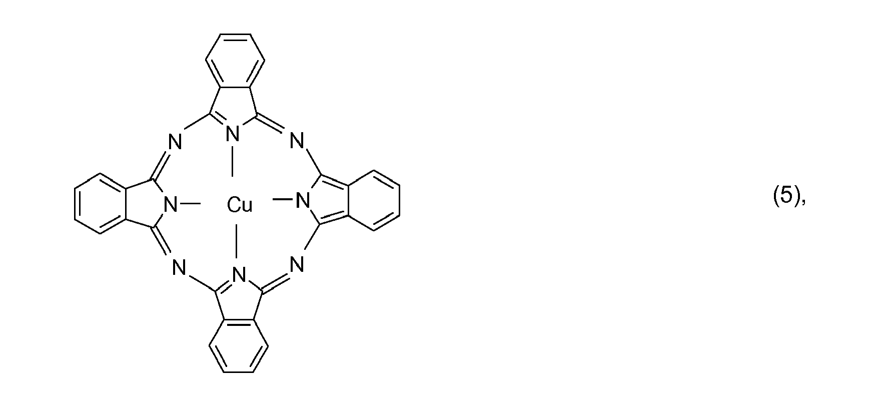 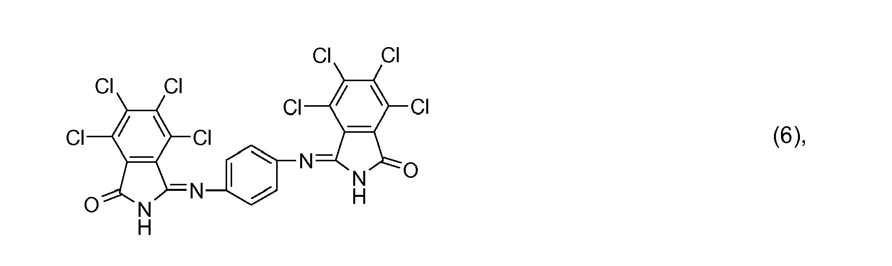 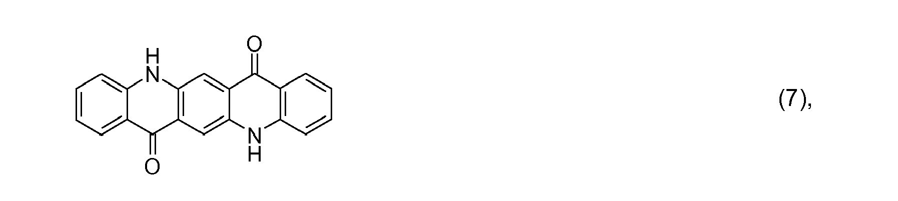 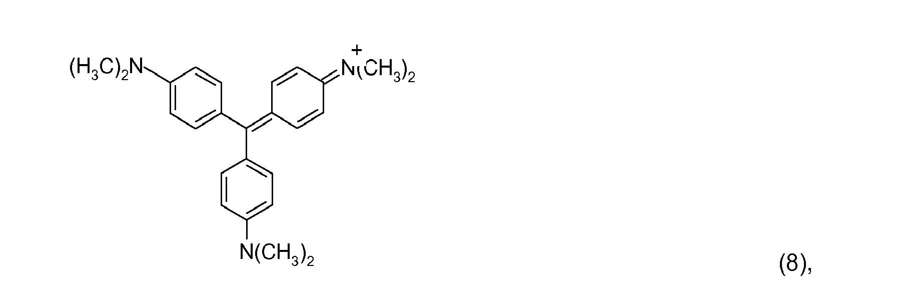 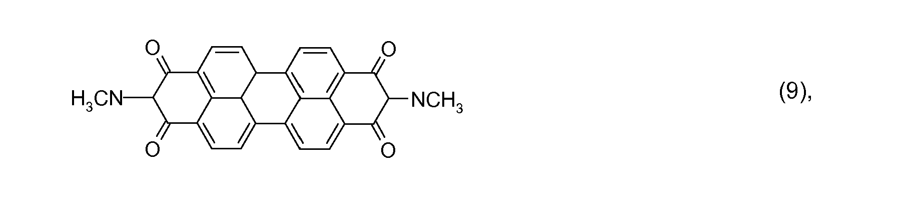 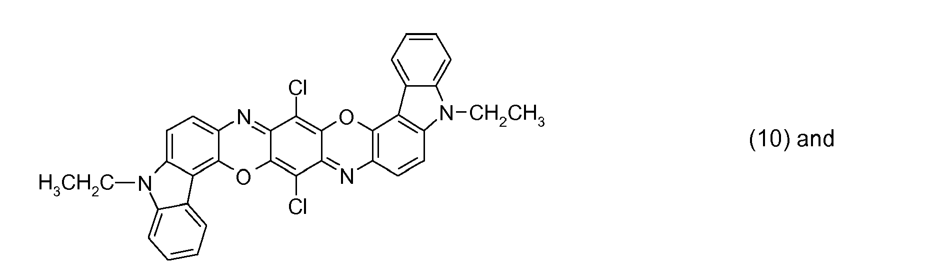 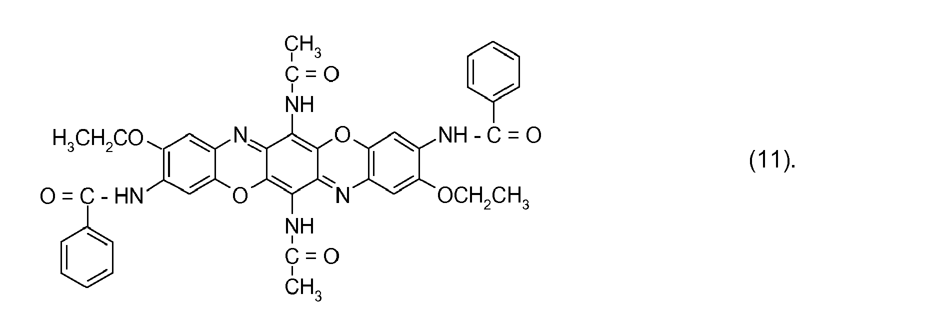 Especially useful pigment compositions are those wherein the organic pigment is a diketopyrrolopyrrole pigment.

Such a pigment composition wherein the organic pigment is a pigment mixture consisting of from 1 to 99 percent by weight of a diketopyrrolopyrrole pigment and from 1 to 99 percent by weight of an azo, quinophthalone, anthraquinone, iminoisoindoline, iminoisoindolone, phthalocyanine or quinacridone pigment are especially useful pigment compositions of the present invention.
Especially notable pigment compositions contain the diketopyrrolopyrrole of the formula 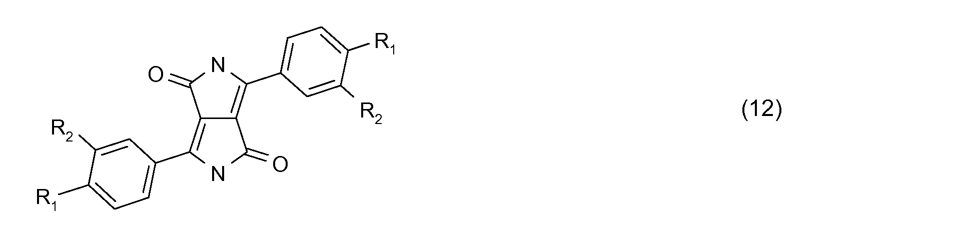 wherein R₁ is hydrogen, chlorine, bromine, cyano, methyl, ethyl, t-butyl or phenyl and R₂ is hydrogen, chlorine, methyl or cyano, or a blend of them.

Pigments having the above formula are known in the art as 3,6-diaryl-1,4-diketo-pyrrolo [3,4-c]pyrrole or 1,4-diketo-3,6-diaryl-pyrrolo[3,4-c]pyrrole pigments and have also been called 3,6-diaryl-1,4-diketo-2,5-dihydro-pyrrolo[3,4-c]pyrrole or 3,6-diaryl-2,5-dihydro-pyrrolo[3,4-c]pyrrole-1,4-dione compounds in the chemical literature. They are usually referred to as diketopyrrolopyrrole or pyrrolopyrrole pigments in this application. Said pigments are disclosed e.g. in US-A-4,415,685 or in US-A-4,579,949.

Other useful pigment compositions include those wherein the organic pigment is C.I. Pigment Red 254, C.I. Pigment Red 255, C.I. Pigment Red 264 or C.I. Pigment Orange 73 or blend of two and more of those pigments.

Other notable pigment compositions contain and a quinacridone pigment selected from the group consisting of C.I. Pigment Red 202, C.I. Pigment Red 122 and C.I. Pigment Violet 19, or the corresponding pigment crude.

The organic pigments utilized in this invention are known and are prepared by known synthesis and/or pigment conditioning processes. However, they are preferably used in the pigment crude form; pigment crude meaning the unconditioned, untreated form obtained from the last synthetic step. Pigments of the proper shape for use in the present process are prepared by drying the pigment presscake by methods known in the art. For example, the presscake of the pigment crude is fluidized bed, tray or spray dried. Subsequently, depending on the pigment particle size, the dried pigment, in particular the tray-dried pigment, is optionally micropulverized, for example with hammer mills or air-jet pulverizers. It is also possible to involve water press cakes containing 1 to 99, preferably 20 to 60 % by weight solid content

The polymers which is used in the inventive pigment composition are for example polyelectrolytes, like polyvinylalcohol, polyvinylacetate, polyvinylpyrrolidone, polyesters, polyethyleneimine, polyvinylpyridine and copolymers or blends of them, polymers, random copolymers, AB-block copolymers and the like, comb-copolymers and the like, based on polyether, polyurethane, polyacrylic acid, polyacrylate, polymethacrylate, particularly polyacrylates and polymethacrylates made following Examples of WO/0040630 and WO/0151534, polyester, polyamide and the like, partially neutralised or quaternised following Examples of WO/0040630, or modified with pigment anchoring groups as described in WO/9903938 and WO/0144332, mixtures, blends or copolymers made from the previously described polyelectrolytes and the previously described polymers, commercial or non-commercial.
The amount of polymer in the inventive pigment composition can vary from 0.1 to 99.9%, preferably from 2 to 30% and most preferably from 5 to 20% by weight calculated on the pigment weight.

Any anionic, cationic or non-ionic, preferably non-ionic surfactant can be used in the inventive pigment composition. Illustrative examples of such surfactants are listed for example in "Surfactants: Chemistry and Properties", Anthony J. O'Lenick, Allured Publishing Corporation 1999.
The amount of said surfactant can vary from 0 to 50, preferably from 1 to 20, more preferably from 1 to 10 and most preferably from 5 to 10% by weight calculated on the solvent weight.

Solvent concentration in the inventive pigment composition can vary from 0 to 100% of the total volatile content, preferably from 0 to 5, more preferably from 0.5 to 5 and most preferably from 2 to 3% by weight of the water weight.
Water content in the inventive pigment composition can vary from 0 to 100, preferably from 95 to 100 and most preferably from 95 to 98% by weight of the total weight of the volatile content.
Also important is an inventive pigment composition with water content from 99 to 100%, preferably 100% by weight of the total weight of the volatile content.

The pigment compositions are generally prepared by conventional methods, for example, by mixing the individual components in the desired ratio as dry powders preferably in ball or bead mills at a linear speed preventing from grinding the pigment particles. The pigment dispersion can be dispersed in a circular way or in a multi pass way.

When the pigment compositions is prepared using a pure solvent, a dry form of a pigment is dispersed in this solvent and stirred until homogenous. Optionally, polar pigment derivate is added. Then at least one polymer and/or copolymer is added and the mixture is dispersed using for example a mill with glass beads or stainless steel balls.

When the pigment compositions is prepared using water/solvent emulsion or pure water, dry pigment or pigment in form of a wet cake is stirred in water until homogenous. Optionally, polar pigment derivate, which can be precipitated for example with Ca²⁺, Sr²⁺ or Al³⁺, is added. Then a surfactant and a polymer and/or copolymer, and, in case of water/solvent emulsion a solvent are added and the mixture is dispersed using for example mill with glass beads or stainless steel balls.

The dry powders are prepared, for example, by spray, fluidized bed, tray, spin flash or horizontal rotary vacuum drying, preferably spray, fluidized bed or tray drying, optionally followed by micropulverization or air-jet pulverization. Micropulverization means, for example, pulverization with a hammermill.

The pigment compositions used in the present process may also additionally contain customary additives. Such customary additives include for example fluidiser and light stabilizer.

As fluidiser can be used all types of common fluidisers, preferably polyvinylalcohol and the like or the fluidising agents disclosed in WO/0114479.
Concentration of the fluidiser is 0-1, preferably 0.1-0.5% by weight calculated on the pigment weight.
Useful light stabilizers are U.V. light absorbers, for example, triazines, benzophenones, benzotriazoles or hindered amine light stabilizers (HALS).

The present pigment compositions possess excellent shelf life and transportation stability. Generally, an effective pigmenting amount of the stir-in pigment is incorporated into the high-molecular-weight organic material to be pigmented. An effective pigmenting amount is any amount suitable to provide the desired color in the high-molecular-weight organic material. In particular, the stir-in pigments are used in an amount of 0.01 to 30% by weight, preferably 0.1 to 10% by weight, based on the weight of the high-molecular-weight organic material to be pigmented.

The pigmented, high-molecular-weight organic materials which are colored according to the present process are useful in a variety of applications. For example, the high-molecular-weight organic material can be used for the pigmentation of lacquers, inks and enamel coating compositions. The pigmented high-molecular-weight organic materials prepared according to the present invention are particularly useful for example for preparing automotive coating paints or DECO or GIP.

The high-molecular-weight organic materials which are colored according to the present process are, for example, cellulose ethers, cellulose esters, polyurethanes, polyesters, polycarbonates, polyolefins, polystyrene, polysulfones, polyamides, polycycloamides, polyimides, polyethers, polyether ketones, polyvinyl halides, polytetrafluoroethylene, acrylic and methacrylic polymers, rubber, silicone polymers, phenol/formaldehyde resins, melamine, formaldehyde resins, urea/formaldehyde resins, epoxy resins and diene rubbers or copolymers thereof.

High-molecular-weight organic materials which are useful for heat-curable or cross-linked coatings, for example chemically-reactive coatings, are also colored according to the present process. The pigmented, high-molecular-weight organic materials prepared according to the present process are especially useful in stoving finishes which contain the customary binders and which are reactive at high temperature. Examples of the high-molecular-weight organic materials which are used in such coatings include acrylic, alkyd, epoxy, phenolic, melamine, urea, polyester, polyurethane, blocked isocyanate, benzoguanamine or cellulose ester resins, or combinations thereof. The pigmented, high-molecular-weight organic materials prepared according to the present process are also useful as air-drying or physically-drying coatings, for example, conventional lacquers such as those used in the cosmetics industry as nail varnishes, for example nitrocellulose lacquers.

The present process is particularly suitable for preparing pigmented coatings conventionally employed in the automobile industry, especially acrylic/melamine resin, alkyd/melamine resin or thermoplastic acrylic resin systems, as well as in aqueous-based coating systems. Coatings and ink systems colored by the present process possess excellent heat, light and weatherfastness, as well as bleed and overspraying fastness properties.

Due to the excellent dispersibility behavior of the stir-in pigments of this invention, uniform distribution of pigment particles throughout the entire application media is achieved. Preparations containing the present pigment composition also show excellent rheological behavior.

The present stir-in pigment composition can be used alone or in the presence of other pigments or dyes. It is especially suitable to color the high-molecular-weight organic material with the present stir-in pigments in conjunction with an effect pigment.

The color effect and shade are varied by varying the kind and the concentrations of the stir-in pigment of the present invention.

Further, the inventive pigment composition can also be used as an easy-dispersible or stir-in powder and/or granulate pigment composition for high-grade solvent borne applications (incl. Automotive), as an easy-dispersible or stir-in pigment powder and/or granulate composition for industrial solvent-borne paints or as a pigment composition with strongly improved rheological properties for solvent-borne applications, particularly for transparent pigments.

Further the inventive pigment composition can also be used for powder coating and mass-coloration of the high-molecular-weight organic material.

The pigment compositions can be used alone or in conjunction with other pigments or dyes. The pigment compositions are particularly suitable for preparing interesting high-chroma solid enamel shades. Exceptionally pure high-chroma shades are created using diketopyrrolopyrrole pigments like C.I. Pigment Red 254 (3,6-di(4-chlorophenyl)-1,4-diketopyrrolo [3,4-c]pyrrole) or C.I. Pigment Red 255 (3,6-diphenyl-1,4-diketopyrrolo[3,4-c]pyrrole or quinacridone pigments such the beta and gamma form of the unsubstituted quinacridone as the organic pigment component. The resulting enamel possesses high opacity, saturation and excellent light and weatherfastness properties. Especially useful pigment compositions contain C.I. Pigment Red 254 as the organic pigment.

The following Examples serve to illustrate the invention. Unless otherwise indicated, the parts are parts by weight and the percentages are percentages by weight. The temperatures are given in degrees Celsius. The relationship between parts by weight and parts by volume is the same as that between grams and cubic centimetres.

### Comparative Example 1a: 4.0 g IRGAZIN Red 2030 (C.I. Pigment Red 254) of the formula

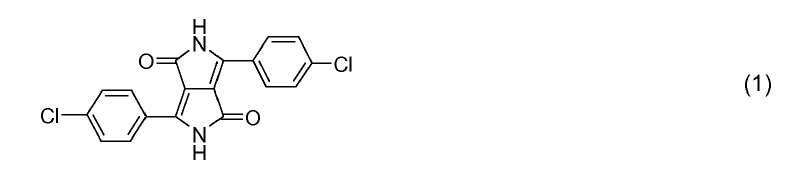

are added to 46.0 g AM-paint prepared as described below. The paint at 8% pigment concentration is dispersed 10 min and 1 hour in Skandex with
200 g glass beads dia. 2 mm. The dispersed paint is drawn down (100 µm) on a Mylar sheet and poured out on a glass plate (poured at an angle of 45°). After 20 minutes, the Mylar sheet and the glass plate are allowed to dry 30 minutes at 130° C in a hot air oven. From the Mylar sheet, the following colour properties are measured using a Datacolor 3890 colorimeter: lightness L*, chroma C*, hue h and opacity (as ΔTr. over black). The contrast paper is a clean and new standard Leneta. From the poured out glass plates, the gloss at 20° angle using a gloss meter ZGM 20° from Zehntner Electronics Co. (Switzerland) are determined.

Further, a white reduction containing 5 parts of pigment and 95 parts of white pigment is prepared: 3.27 g of the previously prepared mass tone paint are added to 26.73 g white AM-paint (description below) and mixed with a simple glass stirrer to yield 30 g white reduction, which is drawn down on a Mylar sheet (200 µm). After 10 minutes, a part of the Mylar sheet is rubbed out with the finger, and then allowed to dry 30 minutes at 130°C in a hot air oven. From the Mylar sheet, the colour strength and the rub-out behaviour is assessed. The rub out value is the ΔE* between the rubbed out and the non-rubbed area. A positive value indicates that the colour strength of the rubbed out area is higher than the non-rubbed.

| Preparation of the AM-paint | |
|---|---|
| Mass *tone*: | 60.00 - parts of Bayer Alkydal F 310 (resin), 60% in Solventnaphtole |
| | 16.00 - parts of Cytec Cymel 327 (hardener), 90% in isobutanole |
| | 19.00 - parts of xylole |
| | 2.00 - parts of butanole |
| | 2.00 - parts of 1-methoxy-2-propanole |
| | 1.00 - parts of silicon oil A, 1 % in xylole |
| *White reduction*: | 20.00 - parts of titandioxide Kronos 2310 (white pigment) |
| | 47.67 - parts of Bayer Alkydal F 310, 60% in Solventnaphtole |
| | 12.75 - parts of Cytec Cymel 327, 90% in butanole |
| | 0.50 - parts of Aerosil 200 (Degussa AG, fumed silica) |
| | 1.59 - parts of 1-methoxy-2-propanole |
| | 1.59 - parts of butanol |
| | 15.10 - parts of xylole |
| | 0.80 - parts of silicon oil A, 1 % in Xylol |

### Comparative Example 1b ('stir-in' dispersion):

7.50 g IRGAZIN Red 2030 are poured into a plastic beaker with 16.58 g of the AM-binder and 5.92 g of the mixture of solvents described above (total 30 g). The mixture is stirred 30 minutes at 2000 rpm with a Cowles-type dissolver. 16.00 g of this mill base containing 25% pigment are reduced with 25.17 g AM-binder and 8.83 g mixture of solvents, producing 50 g mass tone reduction containing 8% pigment. This reduction is used to test the mass tone colour properties (see below). By adding 1.11 g of the mill base 25% to 28.89 g of the white paint described below, we obtained 30 g white reduction containing 5 parts coloured pigment and 95 parts white pigment. All tests are carried out as described under Comparative Example 1a.

| AM-paint components: | |
|---|---|
| *Mixture of solvents*: | 71.4 - parts of xylole |
| | 14.3 - parts of 1-methoxy 2-propanole |
| | 14.3 - parts of butanole |
| *AM-Binder:* | 70.0 - parts of Bayer Alkydal F 310, 60% in Solventnaphtole |
| | 30.0 - parts of Solutia Maprenal MF650 (hardener), 56% in |
| | isobutanole |
| *White paint:* | 18.56 - parts of titan dioxide Kronos 2310 |
| | 44.25 - parts of Bayer Alkydal F 310, 60% in Solventnaphtole |
| | 19.02 - parts of Solutia Maprenal MF650, 56% in isobutanole |
| | 0.46 - parts of Aerosil 200 |
| | 1.47 - parts of 1-methoxy-2-propanole |
| | 1.47 - parts of butanole |
| | 14.02 - parts of xylole |
| | 0.75 - parts of silicon oil A, 1 % in xylole |

### Comparative Example 2a ('State of the art'):

The preparation method is identical to Comparative Example 1a, with the following exception: 4.0 g untreated pigment are added to 42.0 g AM-paint prepared as described below and 4.0 g of the hyperdispersant Disperbyk 166 (30% in n-butylacetate) from BYK-Chemie. By comparison with Comparative Example 1 a, the shade in mass tone is yellowier, the pour out is glossy and the colour strength in white reduction is stronger. After 10 minutes Skandex dispersion, the colour strength exceeds the colour strength of Comparative Example 1a (=100%) after 1 hour.

### Comparative Example 2b:

The preparation method is identical to Comparative Example 1 b, with the following exception: 7.50 g untreated pigment are poured into a plastic beaker with 9.0 g BYK Disperbyk 166 (30% in n-butylacetate), 11.99 g of the AM-binder and 1.51 g of the mixture of solvents described below (total 30 g). By comparison with Comparative Example 1 b, the shade in mass tone is yellowier, the pour out is glossy and the colour strength in white reduction is stronger.

### General preparation for Examples 3-7:

A 100 ml-beaker is poured with 40.0 g wet cake of IRGAZIN Red 2030 containing 35% dry content, 37.0 g water and 50 mg Clariant Mowiol 3-83 and stirred at room temperature during 30 minutes using a Nylon double-blade stirrer at 2.2 m/s linear speed. 150 mg Henkel Comperlan OD are added, the pigment paste is stirred further 10 minutes at 2.2 m/s. 1.12 g copolymer¹ previously diluted in 1.68 g n-butylacetate are then added and the paste is stirred further 10 minutes at 1.32 m/s. 120g glass beads of 2 mm diam., are added and then the pigment emulsion is dispersed at 1.32 m/s during 1 hour. The glass beads are removed, and the pigment is filtered on a suction filter diam. 15 cm with a Whatman filter paper. The wet cake is dried over night in an oven at 40° C under vacuum.

¹ The copolymer is usually added as a solution in a non-miscible or miscible solvent. If the solvent is non-miscible, the amount of solvent present is subtracted from the needed amount of n-butylacetate.

The product is tested as following:

### Test method A ('easy-dispersible')

The test method is identical to Comparative Example 1a. The colour properties in mass colouration are directly compared to Comparative Example 1 a. The colour strength in white reduction is corrected to take into account the presence of uncoloured solids in the pigment composition.

### Test method B ('stir-in')

The test method is identical to Comparative Example 1 b. The colour properties in mass colouration are directly compared to Comparative Example 1 b. The colour strength in white reduction is corrected to take into account the presence of uncoloured solids in the pigment composition.

### Example 3:

Following the "general preparation of Examples 3-7", IRGAZIN Red 2030 is treated with a butylacetate²/dimethylaminomethylmethacrylate³ comb-copolymer synthesized following Example 6.1.2 of WO/0151534. By comparison with Comparative Example 1 a (test method A), the shade in mass tone is considerably yellowier, the pour out is extremely glossy and the colour strength in white reduction exceeds 100% after 10 minutes Skandex dispersion. By comparison with Comparative Example 1 b (test method B), the saturation in mass tone is much greater, the shade is considerably yellowier, the pour out plate is very glossy and the colour strength in white reduction is by far higher.

### Example 4:

Following the "general preparation of Examples 3-7", IRGAZIN Red 2030 is treated with a BA/DMAEMA *AB*-*block*-copolymer synthesized following Example 1.1.2 of WO/0040630. By comparison with Comparative Example 1 a (test method A), the saturation in mass tone is higher, the shade is yellowier and the pour-out plate is more glossy. By comparison with Comparative Example 1 b (test method B), the saturation in mass tone is greater, the shade
² referred to as 'BA' in the following examples
³ referred to as 'DMAEMA' in the following examples
is yellowier, the pour out plate is more glossy and the colour strength in white reduction is higher.

### Example 5:

Following the "general preparation of Examples 3-7", IRGAZIN Red 2030 is treated with a BA/t-butylaminoethylacrylate *AB*-*block*-copolymer synthesized following Example 1.1.4.4 of WO/0040630. By comparison with Comparative Example 1a (test method A), the saturation in mass tone is higher and the pour-out plate is more glossy. By comparison with Comparative Example 1 b (test method B), the saturation in mass tone is greater, the shade is yellowier, the pour out plate is more glossy and the colour strength in white reduction is higher.

### Example 6:

Following the "general preparation of Examples 3-7", IRGAZIN Red 2030 is treated with the commercial hyperdispersant AVECIA Solsperse 32500. By comparison with Comparative Example 1 a (test method A), the saturation in mass tone is much higher, the shade is yellowier and the pour-out plate is considerably glossier. The colour strength after 10 minutes Skandex dispersion equals the colour strength of Comparation Example 1 a after 1 hour dispersion. By comparison with Comparative Example 1 b (test method B), the saturation in mass tone is greater, the shade is yellowier, the pour out plate is glossier and the colour strength in white reduction is higher.

### Example 7:

Following the "general preparation of Examples 3-7", IRGAZIN Red 2030 is treated with the commercial hyperdispersant Disperbyk 2001 from BYK-Chemie. By comparison with Comparative Example 1a (test method A), the saturation in mass tone is higher and the pour-out plate is glossier. By comparison with Comparative Example 1 b (test method B), the saturation in mass tone is greater, the pour out plate is glossier and the colour strength in white reduction is higher.

### General preparation for Examples 8-9:

A 100 ml-beaker is poured with 12.0 g IRGAZIN Red 2030 as dry powder, 10.0 g methanol and 55.0 g water. The mixture is stirred at room temperature during 30 minutes using a Nylon double-blade stirrer at 2.2 m/s linear speed. 0.36 g pigment derivative of the formula 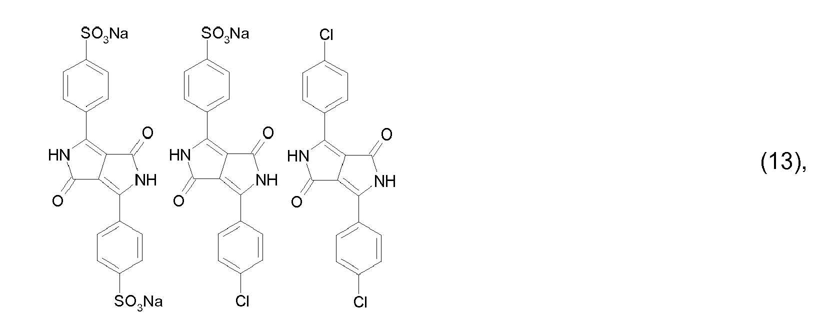 prepared following Example 17 of US-A-4,914,211 is added, and the mixture is stirred further during 10 minutes. Then 0.15 g anhydrous calcium chloride are added and the mixture is stirred further during 10 minutes. 150 mg Henkel Comperlan OD are added, the pigment paste is stirred further 10 minutes at 2.2 m/s. 0.96 g copolymer and 1.44 g n-butylacetate⁴ are added, then the paste is stirred further 10 minutes at 1.32 m/s. 120g glass beads of 2 mm diam. Are added, and then the pigment emulsion is dispersed at 1.32 m/s during 1 hour. The glass beads are removed, and the pigment is filtered on a suction filter diam. 15cm with a Whatman filter paper. The wet cake is dried over night in an oven at 40° C under vacuum.

The product is tested as following:

### Test method B ('stir-in')

The test method is identical to "Comparative Example 1 b. The colour properties in mass colouration and in white reduction are directly compared to Comparative Example 1 a. Beside the assessment of the colour properties, the white reduction drawn down Mylar sheet is observed with a binocular microscope (x100) to assess the dispersion level.

### Example 8:

Following the "general preparation of Examples 8-9", IRGAZIN Red 2030 is treated with the commercial hyperdispersant AVECIA Solsperse 32500. By comparison with Comparative Example 1 a (test method B), the shade in mass tone is considerably yellowier, the pour out is extremely glossy and the colour strength in white reduction is considerably higher. The viscosity of the mill base is strongly reduced. The pigment is completely dispersed (no remaining dark red spots).
⁴ *see* note 2 p. 16.

### Example 9:

Following the "general preparation of Examples 8-9", IRGAZIN Red 2030 is treated with a BA/DMAEMA *AB*-*block*-copolymer synthesized following Example 1.1.2 of WO/0040630. By comparison with Comparative Example 1 a (test method B), the shade in mass tone is considerably yellowier, the pour out is glossier and the colour strength in white reduction is considerably higher. The pigment is fairly dispersed (a few remaining dark red spots).

### Comparative Example 10a:

This example is prepared accordingly to Comparative Example 1a, but IRGAZIN Red 2030 is replaced by IRGAZIN Yellow 3RLTN (C.I. Pigment Yellow 110 "opak") of the formula

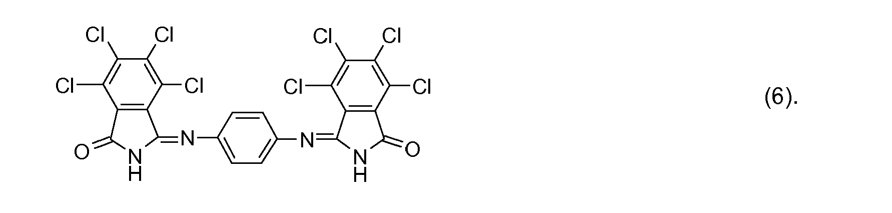

### Comparative Example 10b:

This example is prepared accordingly to Comparative Example 1b, but IRGAZIN Red 2030 is replaced by IRGAZIN Yellow 3RLTN.

### Comparative Example 11a ('State of the art')

This example is prepared accordingly to Comparative Example 2a, but IRGAZIN Red 2030 is replaced by IRGAZIN Yellow 3RLTN and BYK Disperbyk 166 is replaced by AVECIA Solsperse 32500 (same amount). By comparison with Comparative Example 10a, the gloss of the pour out glass is higher and the white reduction is stronger.

### General preparation for Examples 12-13:

A 100 ml-beaker is poured with 33.3 g wet cake of IRGAZIN Yellow 3RLTN containing 30% dry content, 44.5 g water and 50 mg Clariant Mowiol 3-83. The paste is stirred at room temperature during 30 minutes using a Nylon double-blade stirrer at 2.2 m/s linear speed. 150 mg Henkel Comperlan OD are added, the pigment paste is stirred further 10 minutes at 2.2 m/s. 0.8 g copolymer⁵ previously diluted in 1.2 g n-butylacetate are added and the paste is stirred further 10 minutes at 1.32 m/s. Then, 120 g glass beads of 2 mm diam. are added and the pigment emulsion is dispersed at 1.32 m/s during 1 hour. The glass beads are removed, and the pigment is filtered on a suction filter diam. 15 cm with a Whatman filter paper. The wet cake is dried over night in an oven at 40° C under vacuum.
⁵ *See* note 2 p. 16

### Example 12:

Following the "general preparation of Examples 12-13", IRGAZIN Yellow 3RLTN is treated with a BA/DMAEMA comb-copolymer synthesized following Example 6.1.2 of WO/0151534. By comparison with Comparative Example 10a, the pour out is glossier and the colour strength in white reduction is higher. The pigment is fairly dispersed (a few remaining orange spots).

### Example 13:

Following the "general preparation of Examples 12-13", IRGAZIN Yellow 3RLTN is treated with a BA/DMAEMA *AB*-*block*-copolymer synthesized following Example 1.1.2 of WO/0040630. By comparison with Comparative Example 10a, the pour out is glossier and the colour strength in white reduction is higher. The pigment is fairly dispersed (a few remaining orange spots).

### General preparation for Examples 14-15:

A 100 ml-beaker is poured with 10.0 g IRGAZIN Yellow 3RLTN as dry powder, 10.0 g methanol and 57.6 g water. The mixture is stirred at room temperature during 30 minutes using a Nylon double-blade stirrer at 2.2 m/s linear speed. 0.20 g pigment derivative of the formula 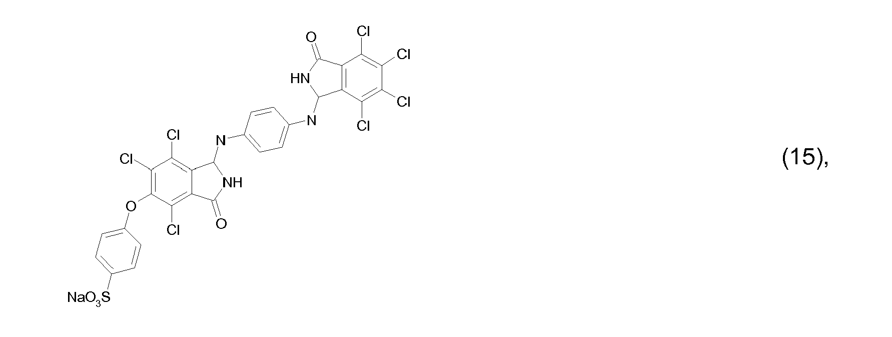 prepared using a modification of the method described in Example 2 of EP-A-321 397, are added, and the mixture is stirred further during 10 minutes. Then 0.15 g anhydrous calcium chloride are added and the mixture is stirred further during 10 minutes. 150 mg Henkel Comperlan OD are added, the pigment paste is stirred further 10 minutes at 2.2 m/s. 0.80 g copolymer and 1.20 g n-butylacetate⁶ are then added and the paste is stirred further 10 minutes at 1.32 m/s. 120 g glass beads of 2mm diam. are added, and then the pigment emulsion is dispersed at 1.32 m/s during 1 hour. The glass beads are removed, and the pigment is filtered on a suction filter diam. 15 cm with a Whatman filter paper. The wet cake is dried over night in an oven at 40° C under vacuum.

### Test method A ('easy-dispersible')

The test method is identical to Comparative Example 10a. The colour properties in mass colouration are directly compared to Comparative Example 10a. The pigment is dispersed 5 minutes and 60 minutes in Skandex. The pigment is considered as easy-dispersible if the colour strength of the drawn down Mylar (200µm) after 5 minutes dispersion is close to or exceeds the standard (Comparative Example 10a) after 60 minutes dispersion.

### Example 14:

Following the "general preparation of Examples 14-15", IRGAZIN Yellow 3RLTN is treated with a BA/DMAEMA *AB*-*block*-copolymer synthesized following Example 1.1.2 WO/0040630. From the results of test method A (easy-dispersible), it appears that the colour strength after 5 minutes dispersion in Skandex already exceeds the value of Comparative Example 10a after 60 minutes. From test method B (stir-in), the pour out plate is much glossier and the colour strength in white reduction is considerably higher than Comparative Example 10a. The viscosity of the mill base is strongly reduced. The pigment is completely dispersed.

### Example 15:

Following the "general preparation of Examples 14-15", IRGAZIN Yellow 3RLTN is treated with the commercial hyperdispersant AVECIA Solsperse 32500. From the results of test method A (easy-dispersible), it appears that the colour strength after 5 minutes dispersion in Skandex already exceeds the value of Comparative Example 10a after 60 minutes. From test method B (stir-in), the pour out plate is much glossier and the colour strength in white reduction is higher than Comparative Example 10a. The viscosity of the mill base is strongly reduced. The pigment is completely dispersed.
⁶ *see* note 2 p. 16.

### Comparative Example 16a:

This example is prepared accordingly to Comparative Example 1a, but IRGAZIN Red 2030 is replaced by IRGAZIN Yellow 2RLT (C.I. Pigment Yellow 110 "transparent") of the formula

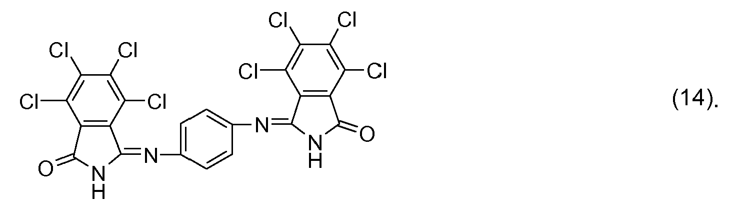

### Comparative Example 16b:

This example is prepared accordingly to Comparative Example 1b, but IRGAZIN Red 2030 is replaced by IRGAZIN Yellow 2RLT. 5.4 g IRGAZIN Yellow 2RLT are poured into a plastic beaker with 20.15 g of the AM-binder and 4.45 g of the mixture of solvents described above (total 30 g). The mixture is stirred 30 minutes at 2000 rpm with a Cowles-type dissolver. 22.22 g of this mill base containing 18% pigment are reduced with 19.09 g AM-binder and 8.69 g mixture of solvents, producing 50 g mass tone reduction containing 8% pigment. This reduction is used to test the mass tone colour properties (see above). By adding 1.51 g of the mill base 18% to 28.49g of the white paint described below, 30 g white reduction containing 5 parts coloured pigment and 95 parts white pigment are obtained. All tests are carried out as described under Comparative Example 1 a.

### General preparation of Examples 17-18:

A 100 ml-beaker is poured with 10.0 g IRGAZIN Yellow 2RLT as dry powder, 10.0 g methanol and 56.35 g water. The mixture is stirred at room temperature during 30 minutes using a Nylon double-blade stirrer at 2.2 m/s linear speed. 0.30 g pigment derivative of the formula (10), prepared using a modification of the method described in Example 2 of EP-A-321 397, are added, and the mixture is stirred further during 10 minutes. Then, 0.20g anhydrous calcium chloride are added and the mixture is stirred further during 10 minutes. 150 mg Henkel Comperlan OD are added, the pigment paste is stirred further 10 minutes at 2.2 m/s. 1.20 g copolymer and 1.80 g n-butylacetate⁷ are added, then the paste is stirred further 10 minutes at 1.32 m/s. 120 g glass beads of 2 mm diam. are added, and then the
⁷ *see* note 2 p. 9.16
pigment emulsion is dispersed at 1.32 m/s during 1 hour. The glass beads are removed, and the pigment is filtered on a suction filter diam. 15 cm with a Whatman filter paper. The wet cake is dried over night in an oven at 40° C under vacuum.

### Example 17:

Following the "general preparation of Examples 17-18", IRGAZIN Yellow 2RLT is treated with the commercial hyperdispersant AVECIA Solsperse 32500. From test method B (stir-in), the pour out plate is much glossier and the colour strength in white reduction is comparable to Comparative Example 16a. The transparency in mass tone is considerably improved. The viscosity of the mill base is strongly reduced. The pigment is completely dispersed.

### Example 18:

Following the "general preparation of Examples 17-18", IRGAZIN Yellow 2RLT is treated with a BA/DMAEMA *AB*-*block*-copolymer synthesized following Example 1.1.2 of WO/0040630. From test method B (stir-in), the pour out plate is much glossier and the colour strength in white reduction is comparable to Comparative Example 16a. The transparency in mass tone is considerably improved. The viscosity of the mill base is strongly reduced. The pigment is completely dispersed.

### Comparative Example 19a:

This example is prepared accordingly to Comparative Example 1a, but IRGAZIN Red 2030 is replaced by IRGAZIN Yellow 2093 (bismuth vanadate, inorganic pigment, C.I. Pigment Yellow 184).

### Comparative Example 19b:

This example is prepared accordingly to Comparative Example 1b, but IRGAZIN Red 2030 is replaced by IRGAZIN Yellow 2093 (bismuth vanadate). 18.0 g IRGAZIN Yellow 2093 are poured into a plastic beaker with 7.65 g of the AM-binder and 4.35 g of the mixture of solvents described above (total 30 g). The mixture is stirred 30 minutes at 2000 rpm with a Cowles-type dissolver. 6.67 g of this mill base containing 60% pigment are reduced with 32.31 g AM-binder and 11.02 g of mixture of solvents, producing 50 g mass tone reduction containing 8% pigment. This reduction is used to test the mass tone colour properties (see above). By adding 0.47 g of the mill base 60% to 29.53 g of the white paint described below, 30 g white reduction containing 5 parts coloured pigment and 95 parts white pigment are obtained. All tests are carried out as described under Comparative Example 1 a.

### General preparation for Examples 20-22:

A 100 ml-beaker is poured with 57.1 g wet cake of IRGAZIN Yellow 2093 containing 35% dry content, and 20.8 g water. The paste is stirred at room temperature during 30 minutes using a Nylon double-blade stirrer at 2.2 m/s linear speed. 150 mg Henkel Comperlan OD are added, the pigment paste is stirred further 10 minutes at 2.2 m/s. Then, 0.8 g copolymer⁸ previously diluted in 1.2g n-butylacetate is added and the paste is stirred further 10 minutes at 1.32 m/s. 120 g glass beads of 2 mm diam. are added, and then the pigment emulsion is dispersed at 1.32 m/s during 1 hour. The glass beads are removed, and the pigment is filtered on a suction filter diam. 15 cm with a Whatman filter paper. The wet cake is dried over night in an oven at 40° C under vacuum. The product is tested as following:

### Test method B ('stir-in')

The test method is identical to Comparative Example 19b. The colour properties in mass colouration are directly compared to Comparative Example 19a.

### Example 20:

Following the "general preparation of Examples 20-22", IRGAZIN Yellow 2093 is treated with the commercial hyperdispersant AVECIA Solsperse 28000. By comparison with Comparative Example 19a, the gloss of the pour out plate is much higher and the viscosity of the 60% mill base is strongly reduced. The other colour properties are similar to Comparative Example 19a.

### Example 21:

Following the "general preparation of Examples 20-22", IRGAZIN Yellow 2093 is treated with the commercial hyperdispersant AVECIA Solsperse 32500. By comparison with Comparative Example 19a, the colour strength in white reduction is higher and the viscosity of the 60% mill base is reduced.

### Example 22:

Following the "general preparation of Examples 20-22", IRGAZIN Yellow 2093 is treated with a BA/DMAEMA *AB*-*block*-copolymer synthesized following Example 1.1.2 of
⁸ *See* note 2 p. 16
WO/0040630. By comparison with Comparative Example 19a, the viscosity of the mill base is reduced. The colour properties are similar to Comparative Example 19a.

### Comparative Ex. 23a:

This example is prepared accordingly to Comparative Example 1a, but IRGAZIN Red 2030 is replaced by IRGALITE Yellow GO.

### Comparative Ex. 23b:

This example is prepared accordingly to Comparative Example 1b, but IRGAZIN Red 2030 is replaced by IRGALITE Yellow GO (C.I. Pigment Yellow 074) of the formula

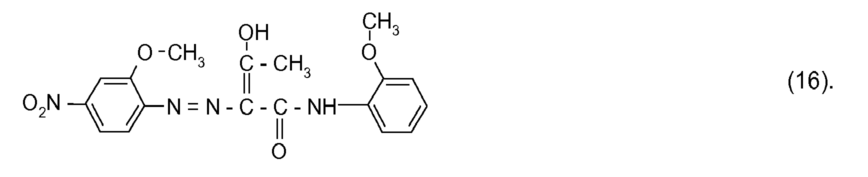

### General preparation for Examples 24-27:

A 100 ml-beaker is poured with 14.0 g IRGALITE Yellow GO as dry powder, and 63.0 g methanol. The mixture is stirred at room temperature during 30 minutes using a Nylon double-blade stirrer at 2.2 m/s linear speed. 0.28 g of the pigment derivative AVECIA Solsperse 22000 are added, and the mixture is stirred further during 10 minutes. Then, 1.12 g dry copolymer⁹ is added, and the paste is stirred further 10 minutes at 1.32 m/s. 120 g glass beads of 2 mm diam. are added, and then the pigment emulsion is dispersed at 1.32 m/s during 1 hour. The glass beads are removed, and the pigment is filtered on a suction filter diam. 15 cm with a Whatman filter paper. The wet cake is washed with large amounts of water, then dried over night in an oven at 40° C under vacuum. The product is tested as following:

### Test method B ('stir-in')

The test method is identical to Comparative Example 23b. The colour properties in mass colouration are directly compared to Comparative Example 23a.
⁹ if the copolymer is added as a solution in an organic solvent, the amount of solvent is subtracted from the total methanol amount.

### Example 24:

Following the "general preparation of Examples 24-27", IRGALITE Yellow GO is treated with the commercial hyperdispersant AVECIA Solsperse 32500. By comparison with Comparative Example 23a, the pour out plate is considerably glossier and the colour strength in white reduction is much higher. The pigment is well dispersed (microscope assessment).

### Example 25:

Following the "general preparation of Examples 24-27", IRGALITE Yellow GO is treated with the commercial hyperdispersant EFKA 4050. By comparison with Comparative Example 23a, the pour out plate is considerably glossier and the colour strength in white reduction is higher. The pigment is well dispersed (microscope assessment).

### Example 26:

Following the "general preparation of Examples 24-27", IRGALITE Yellow GO is treated with a BA/DMAEMA *AB*-*block*-copolymer synthesized following Example 1.1.2 of WO/0040630. By comparison with Comparative Example 23a, the pour out plate is glossier and the colour strength in white reduction is considerably higher. The pigment is well dispersed (microscope assessment).

### Example 27:

Following the "general preparation of Examples 24-27", IRGALITE Yellow GO is treated with the commercial hyperdispersant BYK Disperbyk 2001. By comparison with Comparative Example 23a, the pour out plate is considerably glossier. The other colour properties are similar to Comparative Example 20a. The pigment is fairly dispersed (a few darker spots remaining).

### Example 28:

500.0 g IRGAZIN Red 2030 are carefully mixed in a beaker with 400.0 g methanol to form a compact paste. 2400.0 g demineralised water are added. The suspension is stirred at increasing speed using a Cowles-type dissolver and a glass stopper, to reach about 2000 rpm after 1 hour.
In the meantime, 15.0 g pigment derivative of the formula (8), prepared following Example 17 of US-A-4,914,211, are suspended in 250 ml demineralised water. The suspension is progressively heated to 60-70° C under stirring using a magnetic stirrer. This suspension is carefully added to the pigment suspension. The suspension is stirred further 30 minutes. 10.0 g anhydrous CaCl₂ are dissolved into 50 g water, and the mixture is added dropwise to the pigment suspension in about 1 hour. The suspension is stirred further 30 minutes. The suspension is filtered to obtain a wet cake of pigment, and this wet cake is carefully washed with demineralised water. The final wet cake contains 45-55% solid.
900.0 g wet cake containing 50% Pigment Red 3099FOX are poured into a 4000 ml low form beaker. Then, 2012 g demineralised water are added and the mixture is stirred 30 minutes at 900 rpm with the Cowles-type dissolver to obtain a homogeneous suspension (using a glass rod stopper).
In the meantime, 90 g AVECIA Solsperse 32500 (40% in n-butylacetate) and 2.4 g Henkel Comperlan OD are mixed together in a 100 ml-graduated cylinder with a glass rod.
A Dyno Mill type KDL (600 ml grinding chamber; 4 agitator discs) is filled with SEPR beads (Ø1.6-2.5 mm) and about 300 g of the pigment suspension. A feeding pump WAB ZV1 (Bauknecht) is connected on one side to a metallic tube dived into the pigment suspension and on the other to the inlet tube of the mill. A second peristaltic pump (Type MV-CA) is connected directly to the mill chamber and the other side of the pipe is plunged into the graduated cylinder containing the polymer/n-butylacetate mixture. The pigment suspension is stirred smoothly with a double-anchor stirrer and a part is pumped up to the inlet of the DynoMill to fill the plastic feeding pipe.
For 2 minutes, the mill is run at 3000 rpm with the feeding pump stopped 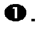 The feeding pump is started at 6.7 kg/h and the suspension is pumped through the mill into a second 4000 ml-beaker equipped with a double anchor stirrer (about 27 minutes dispersion time) 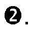 The feeding pump is stopped just when the inlet tube is empty. The DynoMill is also stopped.
The speed of the polymer/solvent pump is set at 5.8 ml/min. The speed of the feeding pump is set at 10.4 kg/h (17 minutes and 20 seconds total time). The DynoMill (3000 rpm) and the solvent pump are run during 1 minute and 40 seconds (10 ml polymer/solvent mixture added) with the feeding pump stopped 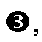 then, the feeding pump is also started. The first 300 ml are collected in a separa-te 500 ml beaker and eliminated. The rest is collected into a 4000 ml beaker (∼15 min.) 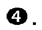

| | Step | Time (tot.) | Time | Feeding pump | Added susp. | Solvent pump | Added solvent |
|---|---|---|---|---|---|---|---|
| Dispersion | 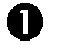 | 2'00" | 2'00" | - | 300g | - | - |
| | 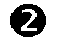 | 27'00" | 25'00" | 6.7kg/h | 3000g | - | - |
| Polymer treatment | 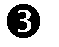 | 1'45" | 1'45" | - | 300g | 5.8ml/min | 10ml (9g) |
| | 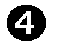 | 17'20" | 15'35" | 10.4kg/h | 3000g | 5.8ml/min | 100ml (90g) |

The pigment suspension is filtered on a ∅30 cm-suction filter to obtain a wet cake. This wet cake is washed until no solvent odour remains (at least 3000 ml water), crushed into smaller pieces and dried over night (at least 18 hours) in an oven under vacuum at 60° C. 380 g low dusting red pigment powder are obtained, whose application properties are similar to Example 8.

### Example 29:

This example is similar to Example 28, with the following exception: Solsperse 32500 is replaced by Solsperse 32600 (40% solution of Solsperse 32000 in Solvesso 100 from Imperial Oil). 370 g low dusting red pigment powder are obtained, whose application properties are similar to Example 8.

### Example 30:

300.0 g IRGAZIN Yellow 2RLT are carefully mixed in a beaker with 500.0 g methanol to form a compact paste. 2037.0 g demineralised water are added. The suspension is stirred during 1 hour using a Cowles-type dissolver and a glass stopper.
In the meantime, 8.0 g of a pigment derivative of the formula (10), prepared using a modification of the method described in Example 2 of EP-A-321 397, are suspended in 100 ml demineralised water. This suspension is progressively heated to 60-70° C under stirring using a magnetic stirrer and carefully added to the pigment suspension. The suspension is stirred further 30 minutes. 5.0 g anhydrous CaCl₂ are dissolved into 50.0 g water, and the mixture is added dropwise to the pigment suspension in about 1 hour. The suspension is stirred further 30 minutes. The suspension is filtered to obtain a wet cake of pigment, and this wet cake is carefully washed with demineralised water. The final wet cake contains 35-45% solid.
650 g wet cake containing 45% Pigment Red 3099FOX are poured into a 4000 ml low form beaker. Then, 2902 g demineralised water are added and the mixture is stirred 30 minutes at 900 rpm with the Cowles-type dissolver to obtain a homogeneous suspension (using a glass rod stopper).
In the meantime, 87.7 g AVECIA Solsperse 32500 (40% in n-butylacetate), 12.55 g n-butylacetate and 2.4 g Henkel Comperlan OD are mixed together in a 150 ml glass beaker with a glass rod.
The Dyno Mill set-up is identical to Example 28, with the following exception: a Dyno Mill type KDL (600 ml grinding chamber; 4 agitator discs) is filled with SEPR beads (∅ 0.8-1.2 mm) and about 300 g of the pigment suspension.
For 2 minutes, the mill is run at 3000 rpm with the feeding pump stopped 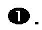 . The feeding pump is started at 6.7 kg/h and the suspension is pumped through the mill into a second 4000 ml-beaker equipped with a double anchor stirrer (about 31 minutes' dispersion time) 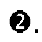 . The feeding pump is just stopped when the inlet tube is empty. The DynoMill is also stopped.
The speed of the polymer/solvent pump is set at 6.2 ml/min. The speed of the feeding pump is set at 12.0 kg/h (18 minutes and 15 seconds total time). The DynoMill (3000 rpm) and the solvent pump are run during 1 minute and 30 seconds (9.3 ml polymer/solvent mixture added) with the feeding pump stopped 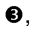 , then, the feeding pump is also started. The first 300 ml are collected in a separate 500 ml beaker and eliminated. The rest is collected into a 4000 ml beaker (∼15min.) 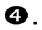 .

| | Step | Time (tot.) | Time | Feeding pump | Added susp. | Solvent pump | Added solvent |
|---|---|---|---|---|---|---|---|
| Dispersion | 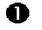 | 2'00" | 2'00" | - | 300g | - | - |
| | 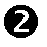 | 32'45" | 30'45" | 6.7kg/h | 3356g | - | - |
| Polymer treatment | 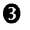 | 1'30" | 1'30" | - | 300g | 6.2ml/min | 9.3ml (8.4g) |
| | 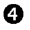 | 18'15" | 16'45" | 12.0kg/h | 3356g | 6.2ml/min | 111ml (100g) |

The pigment suspension is filtered on a ∅ 30cm-suction filter to obtain a wet cake. This wet cake is washed until no solvent odour remains (at least 3000 ml water), crushed into smaller pieces and dried over night (at least 18 hours) in an oven under vacuum at 60° C. 260 g low dusting yellow pigment powder are obtained, whose application properties are similar to Example 17.

### Example 31:

A 1000 ml-glass beaker is poured with 50.0 g IRGAZIN Red 2030 as dry powder, and 280 ml demineralised water. The mixture is dispersed at room temperature during 60 minutes at 700 RPM using a Cowles-type dissolver. A metal stopper (spatula) is fixed in the margin for a better and intensive turbulence.
4.0 g hyperdispersant Solsperse 32000, 0.4 g non-ionic dispersant Aduxol LH-30, (ethoxylated fatty alcohol with 6EO), 0.2 g acetic acid and 35.4 g demineralised water are mixed together with a magnetic stirrer and heated to 40°C in a 100 ml glass beaker on a heating plate to get a homogenous and stable emulsion.
The above suspension of IRGAZIN Red 2030 is transferred to the 2-liter ball mill, the Teflon discs stirrer is mounted, and 320 ml beads are added and the suspension during 1 hour at 1'300 RPM dispersed. Then, the emulsion of Solsperse 32000 is added portion by portion during 30 minutes and the milling is proceeded for further 60 minutes in order to completely cover the pigment surface with the hyperdispersant.
Then, the pigment dispersion is filtered, washed on a porcelain filter with 2-3 litre of demineralised water and dried over night in an oven at maximal 60°C under vacuum.

### Example 32:

This example is prepared accordingly to Example 31, but IRGAZIN Red 2030 is replaced by IRGAZIN Yellow 3RLTN.

## Claims

1. Process for preparation of an stir-in pigment composition for solvent-borne coatings, wherein the amount of polymer is from 2 to 30% by weight calculated on the pigment weight, comprising a treatment of the pigment surface with at least one polymer and/or copolymer, comprising an AB-block copolymer or a comb copolymer, using water/solvent emulsion or pure organic solvent, miscible or non-miscible with the polymer or copolymer, or a mixture of these solvents or only water, in the presence of a surfactant, and optionally in the presence of a polar pigment derivative and/or a fluidiser and/or other components.

2. Process according to claim 1, **characterized in, that** the pigment surface is treated with at least one polymer and/or copolymer using water/solvent emulsion.

3. Process according to claim 1, **characterized in, that** the pigment surface is treated with at least one polymer and/or copolymer using pure organic solvent, miscible or non-miscible with the polymer or copolymer.

4. Process according to claim 1, **characterized in, that** the pigment surface is treated with at least one polymer and/or copolymer using only water.

5. Process according to any of claims 1 to 4, **characterized in, that** the pigment surface is treated in the presence of a polar pigment derivate.

6. Process according to any of claims 1 to 5, **characterized in, that** the pigment surface is treated in the presence of a fluidiser.

7. Stir-in pigment composition for solvent-borne coatings prepared according to any of claims 1 to 6.

8. Stir-in pigment composition according to claim 7, **characterized in, that** this composition comprises from 0.1 to 99.9, preferably from 70 to 98, more preferably from 80 to 98 and more most preferably from 90 to 95% parts by weight of a pigment, preferably an organic pigment.

9. The use of the stir-in pigment composition according to claim 7 or 8 for high-grade solvent-borne coating applications, as an easy-dispersible or a stir-in pigment powder and/or granulate composition for industrial solvent-borne paints or as a pigment composition with strongly improved rheological properties for solvent-borne coating applications, particularly for transparent pigments.

10. The use according to claim 9 of the stir-in pigment composition according to claim 7 or 8 for coloring high molecular-weight organic materials automotive coating paints.
